# EUROPEAN PATENT APPLICATION

(11) **EP 3 432 235 A1**
(43) Date of publication of application: **23.01.2019**
(21) Application number: 18184093.5
(22) Date of filing: 18.07.2018
(51) Int. Cl.: G06Q 10/04, G06Q 10/06, G06Q 50/28, B07C 5/28

(54) **SERVER APPARATUS, MOBILE TERMINAL, AND METHOD PERFORMED BY SERVER APPARATUS FOR BOX PACKING**

(30) Priority: 18.07.2017 JP 2017139438
(71) Applicant: Toshiba TEC Kabushiki Kaisha, Tokyo 141-8562 (JP)
(72) Inventor: KAWAIDA, Yuusuke, Shinagawa-ku,, Tokyo 141-8562 (JP)
(74) Representative: Takeuchi, Maya

(57) **Abstract**

A server apparatus includes a memory that stores an item database, a network interface configured to communicate with a first and a second terminal, and a processor. The processor is configured to receive order information about a plurality of items from the first terminal via the network interface, classify the items according to item information included in the item database, determine a packing position in a packing box for each of the classified items and a packing order of the classified items, and transmit the determined packing position and the determined packing order for each of the classified items to the second terminal.

## Description

### FIELD

Embodiments described herein relates to a server apparatus, a packing apparatus and a box-packing method.

### BACKGROUND

An internet-based sales method such as an online store has become common, and a customer can place an order for some commodities via a website and receive them at home. To handle such an online request, a store staff member at a "real" store or a warehouse gathers the requested commodities based on the order information and packs them into a packing box, which is delivered to the customer.

In such a conventional online shopping system, it is common for a store to rely on a server to determine the packing order of the commodities into the box so as not to damage the commodities due to their weights during delivery. The packing order usually requires the store member to put the commodities from the bottom to the top of the packing box, and the store member has discretion on determining the packing positions of the items in the box.

### SUMMARY OF INVENTION

To solve such problem, there is provided a server apparatus comprising:
a memory that stores an item database;
a network interface configured to communicate with a first and a second terminal; and
a processer configured to:
   receive order information about a plurality of items from the first terminal via the network interface;
   classify the items according to item information included in the item database;
   determine a packing position in a packing box for each of the classified items and a packing order of the classified items; and
   transmit the determined packing position and the determined packing order for each of the classified items to the second terminal.

Preferably, the item information indicates how fragile each of the items is and a weight of each of the items.

Preferably still, the processor is configured to determine the packing order so that a more fragile item is packed at a higher position in the packing box.

Preferably yet, the processor is configured to determine the packing position so that a heavier item is packed at a lower position in the packing box.

Suitably, the processor is configured to determine the packing position so that a heaviest item is packed at a center of the packing box.

Suitably yet, the processor is configured to determine the packing order so that a heavier item is packed earlier than a lighter item.

Suitably still, the first terminal is a user terminal that transmits the order information, and
the second terminal is a mobile terminal configured to display guidance information about the packing position and the packing order.

Typically, the processor is configured to determine a size of the packing box based on a size of each of the items.

Typically still, the processor is configured to determine the size of the packing box based on lengths of three sides of each of the items.

Typically yet, the processor is configured to transmit to the second terminal the packing information including identifying information and a size of the determined packing box.

The invention also relates to a mobile terminal configured to communicate with a server apparatus and display guidance information about items to be packed into a packing box, the mobile terminal comprising:
a display configured to display the information;
a scanner configured to scan a code attached to each of the items; and
a processor configured to:
   receive from the server apparatus packing information indicating a packing position in the packing box for each of the items and a packing order of the items;
display on the display the guidance information including the packing order and the packing position based on the received packing information; and
monitor whether a scanning order of the code is identical with the packing order.

Preferably, the mobile terminal further comprises
an LED,
wherein, when the scanning order is not identical with the packing order, the processor turns on the LED.

Preferably still, the packing information indicates that a more fragile item is packed at a higher position in the packing box.

Preferably yet, the packing information indicates that a heavier item is packed at a lower position in the packing box.

Suitably, the packing information indicates a heaviest item is packed at a center of the packing box.

Suitably still, the packing information indicates that a heavier item is packed earlier than a lighter item.

Suitably yet, the packing information includes identifying information and a size of the packing box

Typically, the processor is configured to control the display to display an image of each of the items.

Typically still, the guidance information indicates a horizontal and a vertical potion of each of the items to be packed into the packing box.

The invention also concerns a method performed by a server apparatus configured to communicate with a first and a second terminal, the method comprising:
classifying a plurality of items according to item information about each of the items included in an item database;
determining a packing position in a packing box for each of the classified items and a packing order of the classified items; and
transmitting packing information about the determined packing position and the packing order to the second terminal.

The invention further relates to a non-transitory computer readable medium storing a program causing a computer to execute the methoddescribed above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a schematic configuration of an online shopping system which is an example of a sales system.
FIG. 2 is a block diagram illustrating an example of a hardware configuration of the store server.
FIG. 3 is a diagram illustrating an example of a data configuration of a commodity master.
FIG. 4 is a block diagram illustrating an example of a hardware configuration of an online shopping server.
FIG. 5 is an external perspective view of a handheld terminal.
FIG. 6 is a block diagram illustrating an example of a hardware configuration of the handheld terminal.
FIG. 7 is a functional block diagram illustrating an example of functional configurations of the online shopping server and the handheld terminal.
FIG. 8 is a diagram illustrating orthogonal view of a rectangular parallelepiped object circumscribing the commodity.
FIG. 9 is a diagram illustrating a packing box in which the commodity is packed.
FIG. 10 is a flowchart illustrating an example of a flow of selection processing performed by a selection unit for selecting a packing box.
FIG. 11 is a flowchart illustrating an example of a flow of box-packing position determination processing for determining the box-packing position and an order of box-packing of the commodity performed by the box-packing position determination unit.
FIG. 12 is a diagram illustrating an example of a classification table of commodities based on weight and collapsibility.
FIG. 13A and FIG. 13B are diagrams illustrating examples of box-packing position determination tables used for determining the box-packing position.
FIG. 14 is a diagram illustrating an example of displaying a packing slip.
FIG. 15 is a diagram illustrating a workflow in the sales system.
FIG. 16 is a flowchart illustrating an example of a flow of processing performed by the sales system.

### DETAILED DESCRIPTION

Embodiments provide a server apparatus, a mobile terminal, and a method performed by the server apparatus, which achieves equalization in box-packing conditions.

A server apparatus in an embodiment includes a memory that stores an item database, a network interface configured to communicate with a first and a second terminal, and a processor. The processor is configured to receive order information about a plurality of items from the first terminal via the network interface, classify the items according to item information included in the item database, determine a packing position in a packing box for each of the classified items and a packing order of the classified items, and transmit the determined packing position and the determined packing order for each of the classified items to the second terminal..

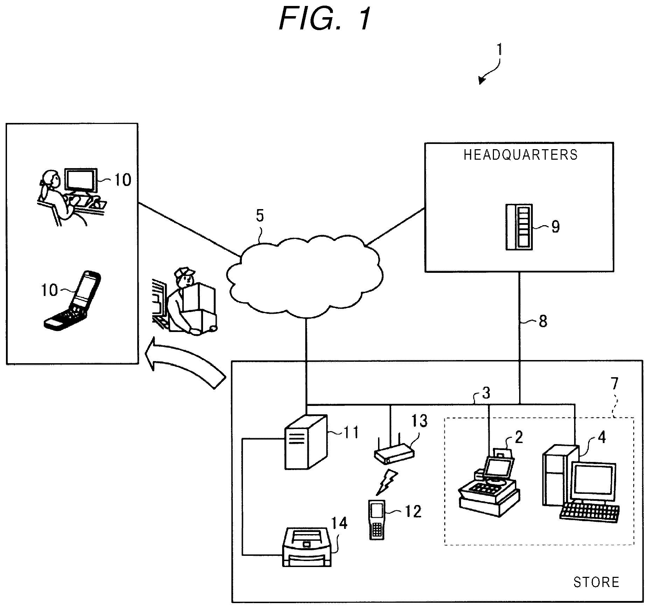

In addition, a mobile terminal according to an embodiment is configured to communicate with a server apparatus and display guidance information about items to be packed into a packing box. The mobile terminal includes a display configured to display the information, a scanner configured to scan a code attached to each of the items, and a processor. The processor is configured to receive from the server apparatus packing information indicating a packing position in the packing box for each of the items and a packing order of the items, display on the display the guidance information including the packing order and the packing position based on the received packing information, and monitor whether a scanning order of the code is identical with the packing order.. Hereinafter, a sales system in an embodiment will be described with reference to the drawings. FIG. 1 is a block diagram illustrating a schematic configuration of a sales system 1. In the sales system 1, a point of sales (POS) system 7 and an online shopping server 11 are connected by a network such as a local area network (LAN) 3 or the like provided in a store.

The online shopping server 11 provides an online shopping service. The online shopping service receives via a sales site on the Internet an order for commodities sold at the store where the POS system 7 is installed.

The POS system 7 is a system for sales and inventory management for the commodities sold at the store. The online shopping server 11 manages the inventory of the commodities in the store in cooperation with a store server 4, and manages order reception and delivery in the online supermarket.

In the sales system 1, a part of the function of the online shopping server 11 may be distributed to a plurality of information processing apparatuses. In addition, a server apparatus provided outside the store may have at least a part of the functions of the online shopping server 11.

The POS system 7 includes the store server 4 and a plurality of POS terminals 2 provided in the store. The sales registration processing in the actual store may be performed by any known technique, and thus the description thereof will be omitted here. The store server 4 is connected to a headquarter server 9 via a dedicated line 8. The headquarter server 9 performs data communication with store servers 4 of the affiliated stores and performs overall management of the sales, stocks, and the like of the affiliated stores.

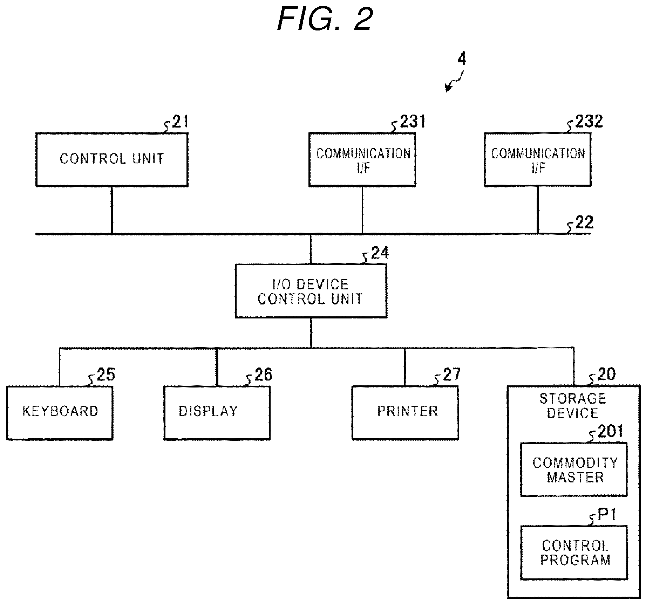

FIG. 2 is a block diagram illustrating an example of a hardware configuration of the store server 4. The store server 4 includes a control unit 21 having a computer configuration including a central processing unit (CPU), read only memory (ROM), random access memory (RAM), and the like. In addition, a keyboard 25, a display 26, a printer 27, a storage device 20, and the like are connected to the control unit 21 via a bus line 22 and an I/O device control unit 24. In an embodiment, the storage device 20 is a hard disk drive (HDD), but other storage devices such as a solid state device (SSD) or the like may be used. The control unit 21 performs data communication with the POS terminal 2 via a communication interface (I/F) 231 and a LAN 3 (refer to FIG. 1). In addition, the control unit 21 performs data communication with the headquarter server 9 (refer to FIG. 1) via a communication I/F 232 and the dedicated line 8 (refer to FIG. 1). The storage device 20 may keep stored information even when the power is turned off. The storage device 20 stores a control program P1 executed by the control unit 21, and a commodity master 201 downloaded from the headquarter server 9, and the like.

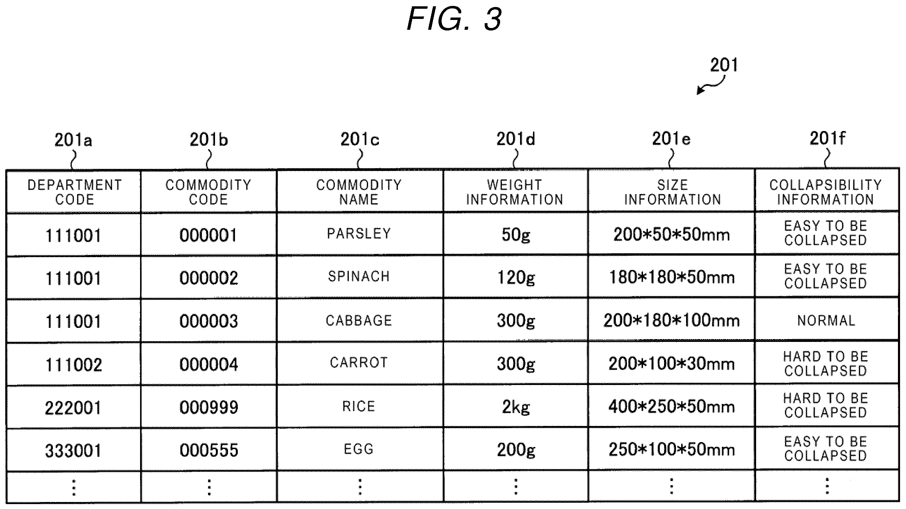

FIG. 3 is a diagram illustrating an example of a data configuration of a commodity master 201. The commodity master 201 is a master file or database for managing commodity information on the commodities sold at the store. As illustrated in FIG. 3, the commodity master 201 stores commodity information such as a department code 201a, a commodity code 201b, a commodity name 201c, weight information 201d, size information 201e, collapsibility information 201f (e.g., whether or not the commodity is fragile), and the like of each commodity. Even though not illustrated in FIG. 3, the commodity master 201 also stores information such as a storage location of the commodity, an image indicating an appearance of the commodity, and the like.

The department code 201a is information indicating a commodity classification. The department code 201a is also referred to as a classification code or a commodity category.

The commodity code 201b is an identifier uniquely specifying the commodity.

The commodity name 201c is information indicating the name of commodity.

The weight information 201d indicates the weight of the commodity. The weight information 201d is used in determining the box-packing position and the order of box-packing which will be described later. The weight information 201d does not necessarily need to be the exact weight of the commodity. For example, for confectionery commodities or the like, the weight information provided by the manufacturers are used. In addition, for fruits, vegetables and the like, the average weights of the fruits and vegetables are stored.

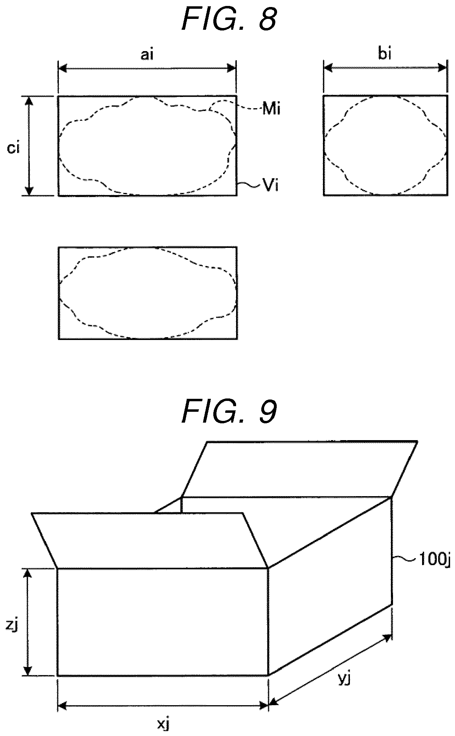

The size information 201e is information indicating the size of the commodities. Specifically, lengths of 3 sides of a rectangular parallelepiped object (e.g., a packing box) circumscribing the commodity are respectively stored (refer to FIG. 8). The size information 201e is used when the packing box is selected, and when the box-packing position and the order of box-packing is determined described later. The size information 201e does not necessarily need to be the exact size of commodity. For example, for the confectionery commodities or the like, the size information is the information provided by the manufacturers. In addition, for the fruits, the vegetables and the like, the average sizes of the fruits and the vegetables are stored.

The collapsibility information 201f indicates how easily a commodity may collapse. In an embodiment, the collapsibility information 201f is an index that the collapsibility of commodity is represented by three levels (easy to collapse, ordinary, difficult to collapse). For example, a commodity such as an egg has the information "easy to collapse" as a collapsible commodity. The collapsibility information 201f is used when determining the box-packing position and the order of box-packing described later.

Returning to FIG. 1, the headquarter server 9 is a server apparatus that includes a control unit with a CPU, ROM, RAM and the like, an input device, a display device, and the like. For example, the headquarter server 9 manages sales data transmitted from the store server 4 of each store. In addition, the headquarter server 9 updates the commodity master 201, and transmits the updated commodity master 201 to the store servers 4 of the affiliated stores.

The customer terminal 10 is an information processing device such as a personal computer (PC) or a mobile phone operated by a customer (user) of the online supermarket. The customer terminal 10 accesses the sales site provided by the online shopping server 11 via the Internet 5 and places an order for a commodity.

Next, an overview of processing from a commodity order receipt to the delivery processing performed by the sales system 1 will be briefly described. The online shopping server 11 generates order data based on a customer's order received from the sales site. The online shopping server 11 issues an order slip and a packing slip based on the order data.

The order data is an information list that includes at least an identification number uniquely identifying the order content, a commodity code of the commodity ordered by the customer, a purchase quantity, and a delivery destination of the commodity. The commodity name and the quantity in the order data are selected from the commodity list displayed in the customer terminal 10 by the customer. In addition, the delivery destination of the commodity is input to the customer terminal 10 by the customer. The online shopping server 11 receives the information input by the customer and acquires a commodity code corresponding to the selected commodity name from the commodity master 201. Furthermore, the online shopping server 11 assigns an order number as an identification number uniquely specifying the order content to the information input by the customer and the commodity code acquired from the commodity master 201, and then, generates order data. The generated order data is stored in the online shopping server 11.

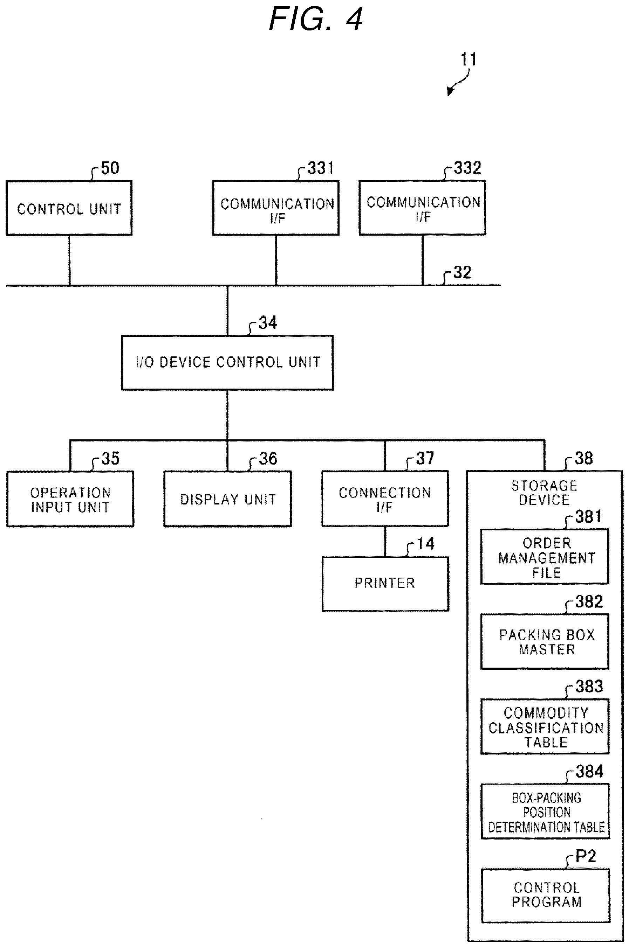

The order slip is a slip generated based on the order data. The order slip includes information such as an order number, a box number for packing the ordered commodity, a box size, a list of the ordered commodity, and a storage location of the commodity. By specifying the order number, it is possible to uniquely identify the information described in the order slip. The order slip is printed by the printer 14 (refer to FIG. 4) and issued. The worker of the store takes the ordered commodity and the packing box for packing the commodity out from a warehouse, that is, performs so-called picking. In addition, the picking worker attaches a bar code indicating the box number to the packing box taken out. In the picking operation, the commodities for multiple delivery destinations may be collectively gathered, or only the commodity for one delivery destination may be gathered. Information on the storage location of the commodity included in the order slip is acquired from the commodity master 201. A method of determining the box number and the box size for packing the ordered commodity included in the order slip will be described later.

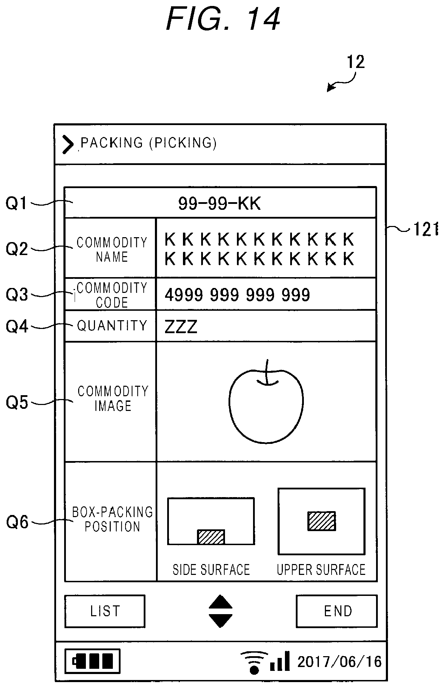

The packing slip is a slip for the worker to refer to when performing the box-packing for the picked commodity, that is, performing so-called packing. The packing slip includes information such as the box number and the box size for packing the ordered commodity, the commodity code of the ordered commodity, the box-packing position, and the order of box-packing. The packing slip is transmitted to the packing worker's handheld terminal 12 via the LAN 3 from the online shopping server 11 (refer to FIG. 14). A method of determining the box-packing position and order of box-packing of the commodity will be described later.

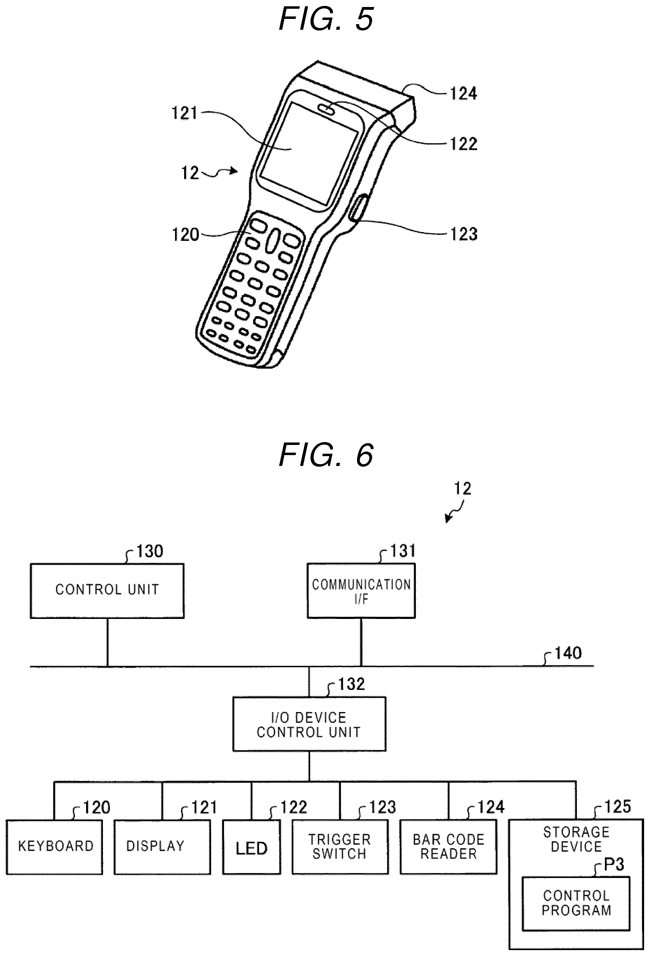

In the handheld terminal 12, the packing slip received from the online shopping server 11 is displayed on the display 121 (refer to FIG. 5) of the handheld terminal 12.
The packing worker reads the bar code attached to the commodity using the handheld terminal 12 according to the designated order of box-packing while looking at the packing slip displayed on the display 121. In this way, the packing worker checks whether the commodity to be box-packed matches the commodity described in packing slip. Thereafter that, the packing worker performs box-packing of the commodity at a predetermined position designated by the packing slip. The configuration and the functions of the handheld terminal 12 will be described in detail later.

Next, the hardware configuration of the online shopping server 11 will be described. FIG. 4 is a block diagram illustrating a hardware configuration of the online shopping server 11. As illustrated in FIG. 4, the online shopping server 11 includes a control unit 50 having a CPU, ROM, RAM and the like. A communication I/F 331 and a communication I/F 332 are connected to the control unit 50 via a bus line 32. The control unit 50 can be connected to the LAN 3 via the communication I/F 331.

In addition, an operation input unit 35, a display unit 36, a connection I/F 37, and a storage device 38 are connected to the control unit 50 via and an I/O device control unit 34. In an embodiment, the operation input unit 35 is a keyboard, a mouse, or the like. In an embodiment, the display unit 36 is a liquid crystal display (LCD). A printer 14 is connected to a connection I/F 37 via the bus line and the interface.

The control unit 50 performs data communication with the handheld terminal 12 via the communication I/F 331 and the LAN 3. The handheld terminal 12 can be connected to the LAN 3 via a repeating device 13. In addition, the control unit 50 performs data communication with the headquarter server 9 via the communication I/F 332 and the dedicated line 8.

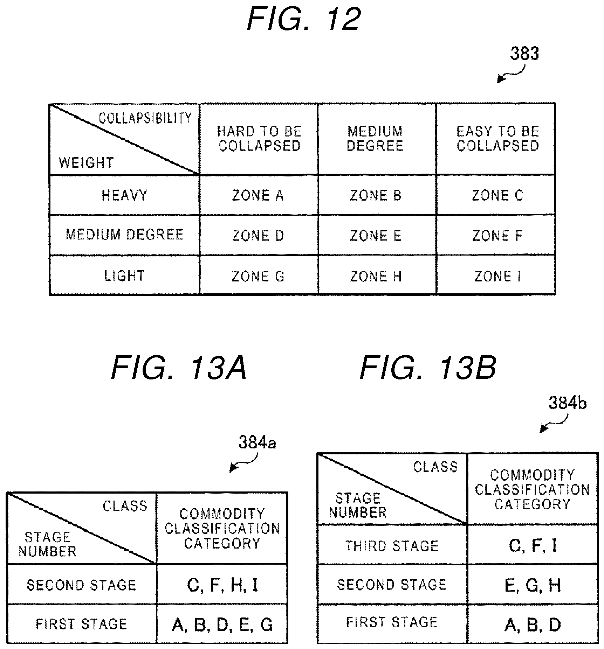

In an embodiment, the storage device 38 is an HDD, a flash memory or the like which keeps stored information even when the power is turned off. The storage device 38 stores a control program P2 executed by the control unit 50 and various set information relating to the execution of the control program P2. In addition, the storage device 38 stores an order management file 381, a packing box master 382, a commodity classification table 383, a box-packing position determination table 384, and the like. The order management file 381 is a file for managing a past order history and the like. The packing box master 382 is a master file that stores information on the size of the packing box for packing the commodity. The commodity classification table 383 is a table (refer to FIG. 12) in which the commodities handled at the store are classified from the viewpoint of weight and collapsibility. Details thereof will be described later. The box-packing position determination table 384 is a table (refer to FIG. 13) for determining a placement stage of the commodity when performing the box-packing of the commodity. Details thereof will be described later.

Next, the handheld terminal 12 will be described. FIG. 5 is an external perspective view of the handheld terminal 12. The handheld terminal 12 has a battery so that a store worker can move around the store or warehouse to find an ordered commodity. On the surface of the handheld terminal 12, a keyboard 120, a display 121, and an LED 122 are provided. On the side surface of the handheld terminal 12, a trigger switch 123 is provided. On the upper side surface of the handheld terminal 12, a bar code reader 124 for reading or scanning a bar code including a box number attached to a packing box for packing the commodity and a bar code including a commodity code attached to a commodity, is provided. Information input from the keyboard 120 and information read by the bar code reader 124 are displayed on the display 121. When performing the packing operation, the packing slip transmitted from the online shopping server 11 is displayed on the display 121. As described later, the LED 122 notifies the packing worker of the fact that the order of box-packing is different from the instruction in the packing slip by lighting or blinking. The trigger switch 123 is a start switch that starts reading a bar code by pressing the switch when reading the bar code using the bar code reader 124.

FIG. 6 is a block diagram illustrating an example of a hardware configuration of the handheld terminal 12. As illustrated in FIG. 6, the handheld terminal 12 includes a control unit 130 having a CPU, ROM, RAM, and the like. A communication I/F 131 is connected to the control unit 130 via a bus line 140. The control unit 130 is wirelessly connected to the repeating device 13 (refer to FIG. 1) via the communication I/ F131. Furthermore, as described above, since the repeating device 13 is connected to the online shopping server 11 via the LAN 3, the control unit 130 of the handheld terminal 12 can be connected to the online shopping server 11.

In addition, the keyboard 120, the display 121, the LED 122, the trigger switch 123, and the bar code reader 124 are connected to the control unit 130 via an I/O device control unit 132. Furthermore, a storage device 125 is connected to the control unit 130 via the I/O device control unit 132.

In an embodiment, the storage device 125 is an HDD or a flash memory or the like which keeps the stored information even when the power is turned off. The storage device 125 stores a control program P3 executed by the control unit 130 and various set information relating to the execution of the control program P3.

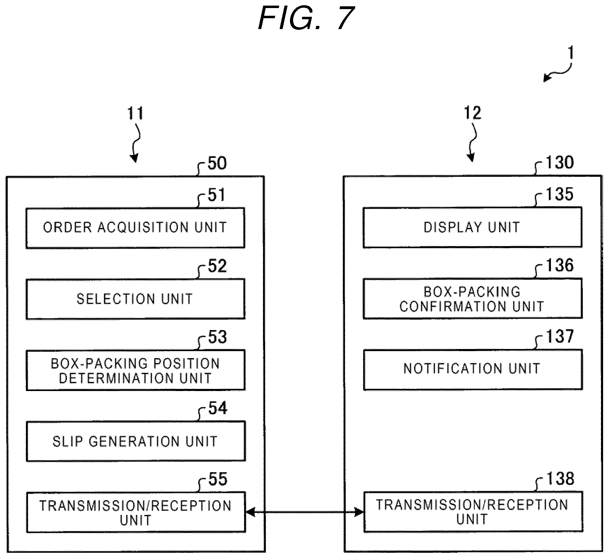

Next, functional configurations of the online shopping server 11 and the handheld terminal 12 will be described. FIG. 7 is a functional block diagram illustrating an example of functional configurations of the online shopping server 11 and the handheld terminal 12. As illustrated in FIG. 7, the control unit 50 of the online shopping server 11 is configured as an order acquisition unit 51, a selection unit 52, a box-packing position determination unit 53, a slip generation unit 54, and a transmission/reception unit 55 illustrated in FIG. 7 by loading the control program P2 (refer to FIG. 4) into the RAM and executing the control program P2.

In addition, the control unit 130 of the handheld terminal 12 is configured as a display control unit 135, a box-packing confirmation unit 136, a notification unit 137, and a transmission/reception unit 138 illustrated in FIG. 7 by loading the control program P3 (refer to FIG. 6) into the RAM and executing the control program P3.

The order acquisition unit 51 acquires order information about the commodities selected and ordered by the customer. In addition, the order acquisition unit 51 acquires the specification of each commodity (commodity name, commodity code, and an image of commodity) from the commodity master 201 (refer to FIG. 2) based on the commodity code of the commodity included in the acquired order information. The order acquisition unit 51 generates and stores the order data.

The selection unit 52 selects the size of the packing box capable of storing all the ordered commodities from the packing boxes registered in the packing box master 382 based on the commodity code read by the order acquisition unit 51.

The box-packing position determination unit 53 determines the horizontal and vertical position of the commodities to be packed into the box and the order of box-packing of each commodity into the packing box selected by the selection unit 52 based on the commodity master 201 stored in the storage device 20 of the store server 4.

The slip generation unit 54 generates the order slip and the packing slip based on the order data of the commodity, the size of the packing box selected by the selection unit 52, the box-packing position and order of box-packing of each commodity determined by the box-packing position determination unit 53. In addition, the slip generation unit 54 issues the generated order slip by causing the printer 14 to print the order slip.

The transmission/reception unit 55 transmits the packing slip generated by the slip generation unit 54 to the transmission/reception unit 138 of the handheld terminal 12. In addition, the transmission/reception unit 55 receives the box number attached on the packing box that is read by the handheld terminal 12.

The display control unit 135 controls the display 121 to display the packing slip.

The box-packing confirmation unit 136 reads the packing slip from the online shopping server 11 by reading the bar code including the box number attached to the packing box before packing. In addition, the box-packing confirmation unit 136 reads the bar code including the commodity code of the commodity to be box-packed and compares the bar code information with the commodity code recorded in the packing slip, and then, confirms that the right commodity is box-packed.

The notification unit 137 instructs the LED 122 to generate a notification for the packing worker when the commodity designated to be box-packed next by the packing slip and the commodity to be box-packed next confirmed by the box-packing confirmation unit 136 are different from each other. The LED 122 illustrated in FIG. 5 notifies the packing worker of the difference by lighting or blinking the LED.

A transmission/reception unit 138 receives the packing slip transmitted by the transmission/reception unit 55. In addition, the transmission/reception unit 138 reads the box number attached to the packing box and transmits the box number to the online shopping server 11.

### Description of Action of Selection Unit

Next, the content of selection processing for selecting the size of the packing box capable of storing all the ordered commodities, performed by the selection unit 52 will be described with reference to FIGs. 8 to 10. FIG. 8 is a diagram illustrating orthogonal views of a rectangular parallelepiped object circumscribing the commodity.

Fig. 8 is a diagram illustrating a rectangular parallelepiped object Vi circumscribing a commodity Mi (i = 1, 2, ...). In the commodity master 201 described above, side lengths ai, bi, ci of the rectangular parallelepiped object Vi illustrated in FIG. 8 are respectively stored as size information 201e.

FIG. 9 is a diagram illustrating a packing box 100j (j = a, b, ...) in which the commodity is packed. For example, a plurality of box sizes, such as large, medium, and small, are available as the size of the packing box 100j. The size of each packing box 100j is defined by side length xj, yj, and zj (j = a, b, ...). The packing box master 382 stores the side lengths xj, yj, zj of each packing box 100j.

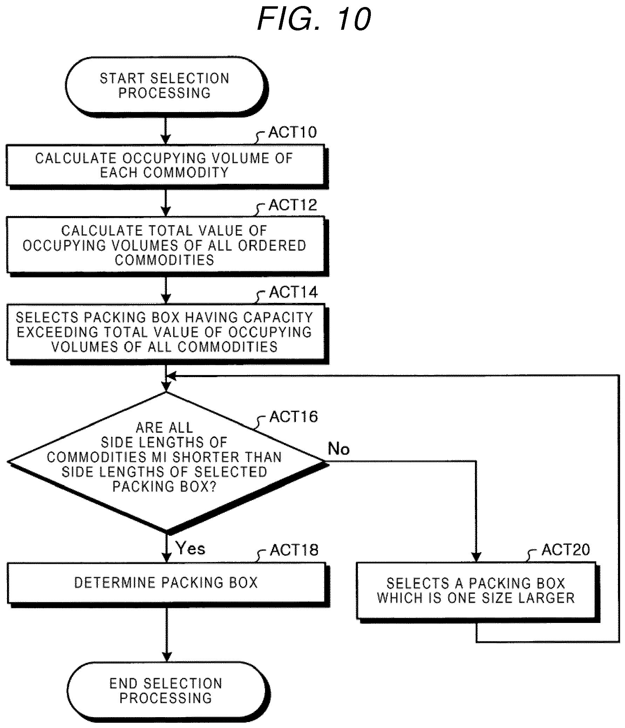

Next, the flow of selection processing performed by the selection unit 52 will be described. FIG. 10 is a flowchart illustrating an example of the flow of selection processing performed by the selection unit 52 for selecting the packing box 100j.

First, the selection unit 52 calculates an occupying volume of each commodity Mi (ACT10). In an embodiment, the occupying volume of commodity is calculated as the volume of rectangular parallelepiped object Vi circumscribing each commodity Mi from the size information 201e of the commodity Mi stored in the commodity master 201.

Next, the selection unit 52 calculates the total value of the occupying volumes of all the ordered commodities Mi (ACT12).

The selection unit 52 selects a packing box 100j having a capacity exceeding the total value of the occupying volumes of all the commodities Mi (ACT14).

For all the commodities Mi, the selection unit 52 determines whether all the side lengths of commodities Mi are shorter than the side lengths of the selected packing box 100j (ACT16). When it is determined that all the side lengths of the commodities Mi are shorter than the side lengths of the selected packing box 100j (Yes in ACT16), the selection unit 52 determines the packing box 100j selected in ACT14 as the packing box (ACT18). The selection unit 52 then ends the selection processing.

On the other hand, when it is determined that all the side lengths of the commodities Mi are not shorter than the side lengths of the selected packing box 100j (No in ACT16), the selection unit 52 selects a packing box 100j which is one size larger than the packing box 100j selected in ACT14 (ACT20). Thereafter, the process is returned to ACT16, and the selection processing described above is repeated.

The number of packing boxes to be selected is not limited to one. That is, in packing the commodities included in the order data, a plurality of packing boxes may be selected when the commodities cannot be packed in one packing box or the weight becomes too heavy if the commodities are packed in one packing box, which results a damage to the box.

### Description of Action of Box-packing Position Determination Unit

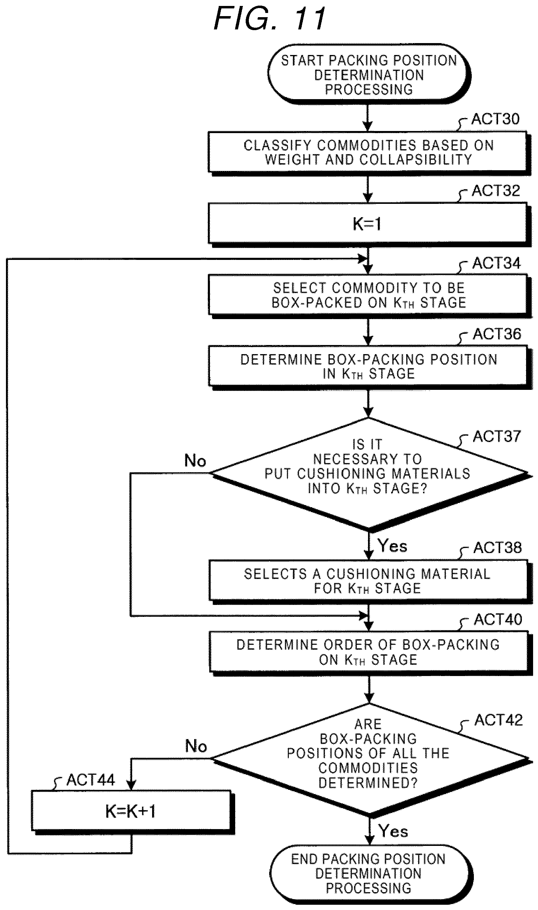

The box-packing position determination processing for determining the box-packing position and the order of box-packing of the commodity performed by the box-packing position determination unit 53 will be described with reference to FIGs. 11 to 13. FIG. 11 is a flowchart illustrating an example of a flow of determining the box-packing position and the order of box-packing of the commodity performed by the box-packing position determination unit 53.

First, the box-packing position determination unit 53 classifies all the ordered commodities Mi based on the weight and the collapsibility (ACT30). FIG. 12 is a diagram illustrating an example of the commodity classification table 383. As illustrated in FIG. 12, the box-packing position determination unit 53 classifies the commodities Mi into three categories in weight (heavy, medium degree, light) and into three categories in collapsibility (hard to be collapsed, medium degree, easy to be collapsed). Specific threshold values for the classification may be appropriately set. By performing such classifications, the commodities Mi can be classified into nine zones from zone A to zone I illustrated in FIG. 12.

Next, the box-packing position determination unit 53 sequentially determines the box-packing position and order of box-packing for box-packing the commodities Mi in the packing box 100j in a direction from the lowermost stage to the uppermost stage of the packing box 100j. In order to do that, a parameter K indicating the stage numbers in the packing box 100j is firstly set to K = 1 (ACT32). K = 1 means the lowest stage in the packing box 100j.

The box-packing position determination unit 53 selects the commodity Mi to be box-packed on the Kth stage in the packing box 100j (ACT34). The selection of the commodity Mi is performed using the box-packing position determination tables 384a and 384b illustrated in FIG. 13A and FIG. 13B.

The box-packing position determination tables 384a and 384b are tables indicating each stage number on which each commodity is box-packed when box-packing the commodity Mi on the Kth stages in the packing box 100j. For example, FIG. 13A is an example of the box-packing position determination table 384a indicating the placement of the commodities when box-packing the commodity Mi in two stages in the packing boxes 100j. Here, the symbols (A to I) described in the commodity classification category in the box-packing position determination table 384a are corresponding to the symbols indicating each classification category in the commodity classification table 383 (refer to FIG. 12). That is, the box-packing position determination table 384a indicates that the commodities (each zone of A, B, D, E, and G) which are heavy and hard to be collapsed are box-packed on the first stage (lowermost stage). In addition, the table 384a indicates that the commodities (each zone of C, F, H, and I) which are light and easy to be collapsed) are box-packed in the second stage (uppermost stage).

Similarly, FIG. 13B is an example of the box-packing position determination table 384b indicating the placement of the commodities when box-packing the commodity Mi in three stages in the packing boxes 100j. Similarly to the box-packing position determination table 384a, the box-packing position determination table 384b is set such that the commodities which are heavier and harder to be collapsed are box-packed in the lower stage.

In an embodiment, the box-packing position determination table 384 (384a and 384b) is set in advance and is stored in the storage device 38 (refer to FIG. 4). In addition, the type of the box-packing position determination table 384 (384a and 384b) is not limited to two types, and tables corresponding to the number of stages for box-packing the commodities Mi, can be prepared.

Returning to FIG. 11, next, the box-packing position determination unit 53 determines the box-packing position of the commodities Mi to be box-packed in Kth stage (ACT36). The box-packing position of the commodities Mi in the same stage is determined based on rules set in advance. For example, a placement rule may be set in advance under the policy that "In order to improve the transportability, the center of gravity position of the packing box is preferred to be as close to the center of the packing box as possible." To that end, the placement rule such as "The heaviest commodity should be placed at the center and other commodities will be placed around the heaviest commodity" may be set in advance. Then, the box-packing position may be determined according to that rule.

Next, the box-packing position determination unit 53 determines whether it is necessary to put cushioning materials into the Kth stage in the packing box 100j (ACT37). Specifically, the box-packing position determination unit 53 determines whether a gap exceeding a predetermined value is present between the commodities Mi to be box-packed on the Kth stage. The presence or absence of the gap and the dimension of the gap are calculated using the size information 201e of each commodity Mi and the side lengths of the packing box 100j. If it is determined that it is necessary to put the cushioning materials (Yes in ACT37), the process proceeds to ACT38. On the other hand, if it is not determined that it is necessary to put the cushioning materials (No in ACT37), the process proceeds to ACT40.

If it is determined that it is necessary to put the cushioning materials into the Kth stage in the packing box 100j (Yes in ACT37), the box-packing position determination unit 53 selects a cushioning material (ACT38). In an embodiment, the size of usable cushioning material is stored in the storage device 38 in advance.

Next, the box-packing position determination unit 53 determines the order of box-packing of the commodities Mi on the Kth stage in the packing box 100j (ACT40). A specific order of box-packing may be determined according to a predetermined rule saying such as "commodity to be box-packed in the same Kth stage will be box-packed in an order of weight" and the like.

Subsequently, the box-packing position determination unit 53 determines whether the box-packing positions of all the commodities Mi are determined (ACT42). If it is determined that the box-packing positions of all the commodities Mi are determined (Yes in ACT42), the box-packing position determination unit 53 ends the processing in FIG. 11.

On the other hand, if the box-packing position determination unit 53 does not determine that the box-packing positions of all the commodities Mi are determined (No in ACT42), that is, if the commodities of which the box-packing position are not determined yet are present, the process proceeds to ACT44.

The box-packing position determination unit 53 increases the parameter K indicating the number of stages in the packing box 100j by one (ACT44). Thereafter, the process returns to ACT34 and selects the commodity Mi to be box-packed on the first stage in the packing box 100j. Thereafter, the processing described above is repeated.

### Description of Packing Slip

Next, a display example of packing slip displayed on the display 121 of the handheld terminal 12 held by a packing worker will be described with reference to FIG. 14. FIG. 14 is a diagram illustrating an example of displaying the packing slip.

The packing slip is issued by the online shopping server 11 based on the order data, and includes the box number Q1 of the packing box 100j, the commodity name Q2 of the commodity Mi, the commodity code Q3, the quantity Q4, the commodity image Q5, the box-packing position Q6.

The box number Q1 is an identification number uniquely specifying the packing box selected by the selection unit 52 of the online shopping server 11.

The commodity name Q2 of the commodity Mi, the commodity code Q3, and the commodity image Q5 are generated by the online shopping server 11 referring to the order data of the commodity.

The quantity Q4 of the commodity Mi is generated by the online shopping server 11 based on the order data of the commodity. In addition, the box-packing position Q6 of the commodity Mi is determined by the box-packing position determination unit 53 of the online shopping server 11 by performing the above-described processing (refer to FIG. 11).

By operating the keyboard 120 (refer to FIG. 5) of the handheld terminal 12, it is possible for the packing worker to view packing slips of various commodities Mi.
In addition, by operating the keyboard 120, it is possible for the packing worker to view a list of ordered commodities Mi.

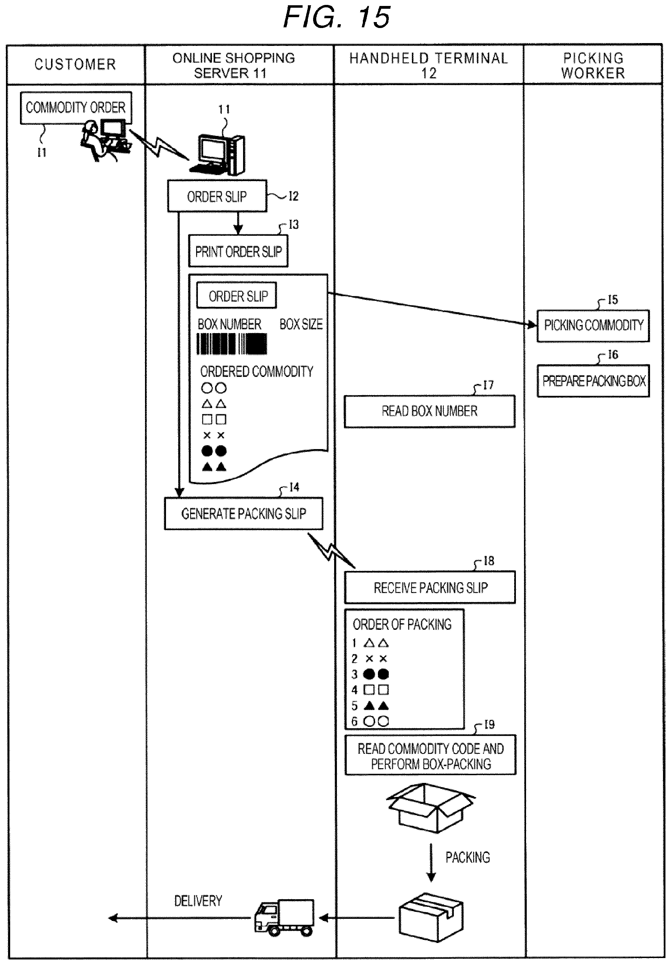

A workflow of the sales system 1 will be described using FIG. 15. FIG. 15 is a diagram illustrating the workflow of the sales system 1.

Hereinafter, the workflow illustrated in FIG. 15 will be described in chronological order. First, the customer places an order for a commodity Mi (Event II). The order data reaches the online shopping server 11 via the Internet 5, and the online shopping server 11 accepts the order (Event 12).

The slip generation unit 54 of the online shopping server 11 reads the order data generated by the order acquisition unit 51, and generates an order slip and prints the order slip (Event 13). At that time, the selection unit 52 selects a packing box for packing the commodity Mi.

In addition, the slip generation unit 54 generates a packing slip (Event 14). At that time, the box-packing position determination unit 53 determines a packing position and an order of packing of the commodity Mi.

The printed order slip is passed to the picking operator and the picking operator gathers (picks) the commodity Mi from the store or from the warehouse (Event 15). In addition, the picking operator prepares the packing box 100j indicated in the order slip (Event 16). At that time, the picking operator attaches a bar code indicating the box number to the packing box 100j. Event 15 and Event I6 may be performed by different operators.

The packing worker has a handheld terminal 12 and reads the bar code including the box number attached to the packing box 100j (Event 17).

The read box number is transmitted from the handheld terminal 12 to the online shopping server 11. The online shopping server 11 transmits a packing slip corresponding to the received box number to the handheld terminal 12. The handheld terminal 12 receives the packing slip (Event 18).

The packing worker reads the commodity code of the commodity Mi to be box-packed next using the handheld terminal 12, and performs box-packing (Event 19). At this time, if a commodity code different from that of the commodity Mi to be box-packed next is read, the notification unit 137 of the handheld terminal 12 performs a notification by blinking the LED 122 or the like.

When the box-packing of all the commodities Mi is finished, the packing worker hands over the packing box 100j in which the commodities Mi are packed, to a delivery operator. Then, the delivery worker delivers the commodities Mi to the customer.

### Description of Flow of Processing Performed by Sales System

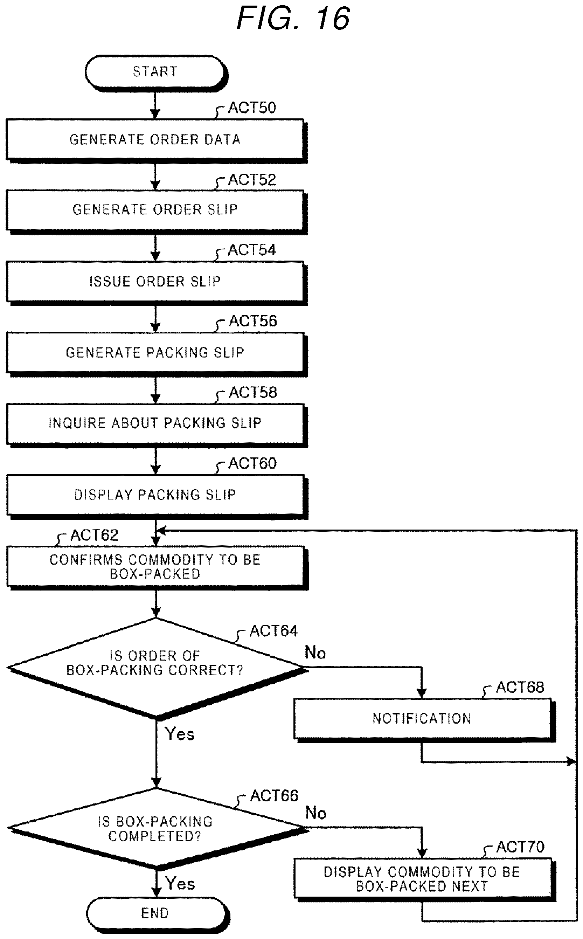

Next, a flow of processing performed by the sales system 1 will be described with reference to FIG. 16. FIG. 16 is a flowchart illustrating an example of a flow of processing performed by the sales system 1.

The order acquisition unit 51 receives a customer's order and generates order data (ACT50). Specifically, the order acquisition unit 51 receives information (at least the commodity name, the quantity, the delivery destination) selected or input by the customer terminal 10 via the Internet 5. Then, the order acquisition unit 51 acquires the commodity code corresponding to the commodity name received from the customer terminal 10, from the commodity master 201. Further, the order acquisition unit 51 generates the order data based on the information received from the customer terminal 10 and the commodity code acquired from the commodity master 201.

Next, the slip generation unit 54 generates an order slip (ACT52). Specifically, the slip generation unit 54 causes the selection unit 52 to select a packing box 100j having a size capable of storing the commodity Mi, that is, to perform the selection processing (refer to FIG. 10) based on the order data generated by the order acquisition unit 51. Then, the slip generation unit 54 generates the order slip based on the information in the order data and the information on the packing box 100j selected by the selection unit 52.

Furthermore, the slip generation unit 54 prints and issues the generated order slip using the printer 14 (ACT54). At this time, the slip generation unit 54 also prints the bar code indicating the box number. Although not illustrated in FIG. 16, the printed barcode is attached to the corresponding packing box 100j.

In addition, the slip generation unit 54 generates a packing slip (ACT56). Specifically, the slip generation unit 54 causes the box-packing position determination unit 53 to determine the box-packing position and the order of box-packing of the commodities Mi, that is, to perform the box-packing position determination processing (refer to FIG. 11). The slip generation unit 54 generates the packing slip that includes the box number of the packing box 100j, the box size, the commodity code of the ordered commodity, and the box-packing position and the order of box-packing of the commodities Mi determined by the box-packing position determination unit 53.

The box-packing confirmation unit 136 of the handheld terminal 12 inquires the online shopping server 11 about the packing slip of the commodities to be packed in the packing box 100j (ACT58). Specifically, the box-packing confirmation unit 136 reads the bar code including the box number attached to the packing box 100j. Then, the box-packing confirmation unit 136 reads the packing slip corresponding to the read box number from the online shopping server 11.

The display unit 135 of the handheld terminal 12 displays the packing slip read from the online shopping server 11 on the display 121 (refer to FIG. 5) (ACT60). Although not illustrated in FIG. 16, it is assumed that the commodities Mi to be box-packed have been picked up in advance from a store, a warehouse or the like.

The box-packing confirmation unit 136 of the handheld terminal 12 confirms the commodity Mi to be box-packed next by reading the bar code (commodity code) attached to the commodity Mi which is taken out (picked) by the packing worker for box-packing (ACT62).

Next, the box-packing confirmation unit 136 determines whether the commodity code of the commodity Mi to be box-packed next that is displayed in the display 121 of the handheld terminal 12 has been read in ACT62, that is, whether the order of box-packing is correct (ACT64). If it is determined that the order of box-packing is correct (Yes in ACT64), the process proceeds to ACT66. If it is not determined that the order of box-packing is correct (No in ACT64), the process proceeds to ACT68.

In ACT66, the box-packing confirmation unit 136 determines whether the commodity codes of all the commodities Mi registered in the packing slip are read, that is, whether box-packing of all the commodities Mi is completed (ACT66). When it is determined that the box-packing is completed (Yes in ACT66), the series of processes in FIG. 16 end. On the other hand, when it is not determined that the box-packing is completed (No in ACT66), the display unit 135 of the handheld terminal 12 displays the commodity Mi to be box-packed next on the display 121 (ACT70). Thereafter, the process returns to ACT62.

If it is not determined in ACT64 that the order of box-packing is correct (No in ACT64), the notification unit 137 of the handheld terminal 12 notifies the packing worker of the fact that the order of box-packing is wrong (ACT68) by, for example, lighting or blinking the LED 122 (refer to FIG. 5). Thereafter, the process returns to ACT62.

As described above, according to the online shopping server 11 in an embodiment, the order acquisition unit 51 acquires the commodity code of the ordered commodities Mi and the selection unit 52 selects the packing box 100j for packing the ordered commodities Mi based on the commodity master 201 that stores the size of the commodities Mi corresponding to the commodity code. The box-packing position determination unit 53 determines the box-packing position and the order of box-packing of the commodities Mi having the commodity code acquired by the order acquisition unit 51 in the packing box 100j selected by the selection unit 52. The slip generation unit 54 generates the packing slip that includes the size of the packing box 100j selected by selection unit 52, and the commodity code 201b, the box-packing position, and the order of box-packing of commodities Mi included in order data, and then, the transmission/reception unit 55 transmits the packing slip to the handheld terminal 12 that reads the commodity code of commodities Mi to be box-packed. Therefore, since the box-packing position and the order of box-packing of the commodities Mi are presented, it is possible to equalize the box-packing state when box-packing the commodities Mi. In addition, it is possible to reduce the variations in the worker's box-packing work time.

In addition, according to the online shopping server 11 in an embodiment, the commodity master 201 further stores the collapsibility information 201f of the commodities Mi in correspondence with to the commodity code, and the box-packing position determination unit 53 determines the box-packing position and the order of box-packing such that the commodity Mi harder to be collapsed is box-packed in the lower stage based on the collapsibility information 201f on the commodities Mi. Therefore, it is possible to prevent the commodities Mi from being damaged when box-packing the commodity Mi.

Furthermore, according to the online shopping server 11 of an embodiment, the commodity master 201 further stores the weight information 201d of the commodities Mi in correspondence with the commodity code, and the box-packing position determination unit 53 determines the box-packing position and the order of box-packing such that the commodity heavier is box-packed in the lower stage based on the weight information 201d of the commodities Mi. Therefore, it is possible to prevent the commodities Mi from being damaged at the time of box-packing.

In addition, in the handheld terminal 12 in an embodiment, the transmission/reception unit 138 receives the size of the packing box 100j selected by the online shopping server 11 and capable of storing the ordered commodities Mi, and the packing slip including the box-packing position and the order of box-packing of the ordered commodities Mi determined by the online shopping server 11. The display unit 135 displays the box-packing position and the order of box-packing of the commodities Mi, and at the time of box-packing the commodities Mi, the box-packing confirmation unit 136 reads the commodity code 201b of each of the commodities Mi to be box-packed and compares the commodity code 201b with the commodity code recorded in the packing slip, and then, confirms that the commodities Mi are box-packed. Therefore, it is possible to easily and reliably acquire the box-packing position and the order of box-packing of the commodities Mi, and it is possible to reliably identify the commodity Mi of which the box-packing is completed. Therefore, progress of the packing operation can be reliably managed.

In addition, according to the handheld terminal 12 in an embodiment, the notification unit 137 performs the notification under a condition that box-packing confirmation unit 136 detects that the box-packing is performed in an order different from the order of box-packing included in the packing slip . Therefore, it is possible to prevent a mistake in the order of box-packing the commodities Mi.

Several embodiments of the present disclosure have been described, but those embodiments are merely examples, and it is not intended to limit the scope of the present disclosure. These novel embodiments can be implemented in various other forms, and various omissions, substitutions, and changes can be made without departing from the gist of the disclosure. These embodiments and modifications thereof are included in the scope and gist of the disclosure and are included in the disclosure described in the claims and the equivalent scope thereof.

For example, the control program P1 executed by the store server 4, the control program P2 executed by the online shopping server 11, and the control program P3 executed by the handheld terminal 12 may be provided in a state of being stored in the storage devices 20, 38, and 125 in advance respectively, or may be provided in a form of being recorded in a computer-readable recording medium such as a CD-ROM, a flexible disk (FD), a CD-R, a digital versatile disk (DVD), or the like, in a format of installable or executable file. In addition, the control programs PI, P2, and P3 may be provided in a form of being stored in a computer connected to a network and downloaded via the network. Furthermore, the control programs PI, P2, and P3 may be provided or distributed via a network such as the Internet.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A server apparatus comprising:
a memory that stores an item database;
a network interface configured to communicate with a first and a second terminal; and
a processer configured to:
receive order information about a plurality of items from the first terminal via the network interface;
classify the items according to item information included in the item database;
determine a packing position in a packing box for each of the classified items and a packing order of the classified items; and
transmit the determined packing position and the determined packing order for each of the classified items to the second terminal.

2. The server apparatus according to claim 1,
wherein the item information indicates how fragile each of the items is and a weight of each of the items.

3. The server apparatus according to claim 1 or 2,
wherein the processor is configured to determine the packing order so that a more fragile item is packed at a higher position in the packing box.

4. The server apparatus according to any one of claims 1 to 3,
wherein the processor is configured to determine the packing position so that a heavier item is packed at a lower position in the packing box.

5. The server apparatus according to any one of claims 1 to 4,
wherein the first terminal is a user terminal that transmits the order information, and
the second terminal is a mobile terminal configured to display guidance information about the packing position and the packing order.

6. The server apparatus according to any one of claims 1 to 5,
wherein the processor is configured to determine a size of the packing box based on lengths of three sides of each of the items.

7. The server apparatus according to claim 6,
wherein the processor is configured to transmit to the second terminal the packing information including identifying information and a size of the determined packing box.

8. A mobile terminal configured to communicate with a server apparatus and display guidance information about items to be packed into a packing box, the mobile terminal comprising:
a display configured to display the information;
a scanner configured to scan a code attached to each of the items; and
a processor configured to:
receive from the server apparatus packing information indicating a packing position in the packing box for each of the items and a packing order of the items;
display on the display the guidance information including the packing order and the packing position based on the received packing information; and
monitor whether a scanning order of the code is identical with the packing order.

9. The mobile terminal according to claim 8, further comprising
an LED,
wherein, when the scanning order is not identical with the packing order, the processor turns on the LED.

10. The mobile terminal according to claim 8 or 9,
wherein the packing information indicates that a more fragile item is packed at a higher position in the packing box.

11. The mobile terminal according to any one of claims 8 to 10,
wherein the packing information indicates that a heavier item is packed at a lower position in the packing box.

12. The mobile terminal according to any one of claims 8 to 11,
wherein the processor is configured to control the display to display an image of each of the items.

13. The mobile terminal according to any one of claims 8 to 12,
wherein the guidance information indicates a horizontal and a vertical position of each of the items to be packed into the packing box.

14. A method performed by a server apparatus configured to communicate with a first and a second terminal, the method comprising:
classifying a plurality of items according to item information about each of the items included in an item database;
determining a packing position in a packing box for each of the classified items and a packing order of the classified items; and
transmitting packing information about the determined packing position and the packing order to the second terminal.

15. A non-transitory computer readable medium storing a program causing a computer to execute the method according to claim 14.
